# NEUE EUROPÄISCHE PATENTSCHRIFT

(11) **EP 1 236 661 B2**
(45) Veröffentlichungstag und Bekanntmachung des Hinweises auf die Entscheidung über den Einspruch: **21.10.2009**
(45) Hinweis auf die Patenterteilung: 12.05.2004
(21) Anmeldenummer: 01105185.1
(22) Anmeldetag: 02.03.2001
(51) Int. Cl.: B65G 17/38, F16G 13/12

(54) **Gelenkkette**
Rollerchain
Chaîne à rouleaux

(43) Veröffentlichungstag der Anmeldung: 04.09.2002
(73) Patentinhaber: Beumer Maschinenfabrik GmbH & Co. KG, 59267 Beckum (DE)
(72) Erfinder: Scholz, Richard, Dipl.-Ing., 59510 Lippetal-Nordwald (DE)
(74) Vertreter: Hoormann, Walter R.

(56) Entgegenhaltungen:
- EP-A- 0 284 595
- EP-A- 0 573 068
- EP-A- 0 601 469
- EP-A- 0 767 114
- EP-A- 0 787 665
- EP-B1- 0 662 924
- DE-A- 1 805 815
- DE-A- 4 233 552
- PATENT ABSTRACTS OF JAPAN vol. 1996, no. 01, 31. Januar 1996 (1996-01-31) & JP 07 232811 A (MITSUBISHI HEAVY IND LTD), 5. September 1995 (1995-09-05)
- PATENT ABSTRACTS OF JAPAN vol. 1996, no. 12, 26. Dezember 1996 (1996-12-26) & JP 08 200452 A (HITACHI KIZAI KK), 6. August 1996 (1996-08-06)
- K.H. KOSTER: 'Entwicklung und Stand der Technik von Hochleistungs-Brecherwerken mit Zentralkette' ZKG INTERNATIONAL Bd. 49, Nr. TEIL 2, Seiten 173 - 187
- K. H. KOSTER: 'Entwicklung u. Stand der Technik von Hochleistungs-Becherwerke' ZKG INTERNATIONAL Bd. 48, Nr. TEIL 1, Seiten 615 - 630

## Beschreibung

Die vorliegende Erfindung betrifft eine Gelenkkette als Förderkette für einen Zellenförderer, dessen aus der Kette und einer Vielzahl von an dieser in Reihe hintereinander befestigten Förderzellen bestehender, endloser Förderstrang um (wenigstens) zwei an den Enden der Förderstrecke angeordnete Umlenkräder umläuft, von denen das eine angetrieben ist, und das andere als Spannrad fungiert, insb. für ein (Ketten-)Becherwerk, insb. ein Einfach- oder Doppel-Becherwerk mit (ggf. jeweils) mittig zu den Bechern angeordneter Zentralkette, mit einer Vielzahl paarweise mit gegenseitigem (Quer)-Abstand parallel zueinander sowie parallel und spiegelsymmetrisch zur Ketten-Längsachse angeordneter (Flacheisen-)Innenlaschen, die jeweils unter Bildung eines (inneren) Kettengliedes im Bereich ihrer Endabschnitte durch zwei rechtwinklig zur Ketten-Längsachse in einer Ebene verlaufende (Ketten-)Bolzen miteinander verbunden sind, welche sich jeweils durch die beiden ihnen zugeordneten Innenlaschen eines (Innen-)Laschenpaares sowie durch zwei Außenlaschen mit i.w. L-förmigem Querschnitt erstrecken, welche jeweils zwei einander in Ketten-Längsrichtung benachbarte Innenlaschen zweier einander benachbarter (innerer) Kettenglieder gelenkig miteinander verbinden, und bevorzugt zugleich Befestigungswinkel zur Befestigung der Kette an einer Förderzellen-Rückwand oder einer diese ggf. ersetzenden Halterungsplatte bilden, mittels derer die Kette mit den Förderzellen des Zellenförderers an deren Rückwand durch Befestigungsmittel fest zu verbinden ist, wobei der parallel zu den Innenlaschen verlaufende eine Schenkel jeder Außenlasche von zwei einander benachbarten Kettenbolzen zweier einander benachbarter (innerer) Kettenglieder durchsetzt ist, der im Montagezustand parallel zur Außenseite einer Förderzellen-Rückwand verlaufende andere (Befestigungs-)Schenkel durch Befestigungsmittel wie insb. Schraubverbindungen fest mit einer Förderzellen-Rückwand bzw. - im Falle einer Besetzung nur jeder n-ten (z.B. jeder zweiten) potentiellen Förderzellenstelle mit einer Förderzelle (z.B. einem Becher) - mit einer Halterungsplatte od.dgl. zu verbinden ist, und wobei jeweils der sich zwischen zwei Innenlaschen erstreckende mittlere Bolzenabschnitt, eines (Ketten-)Bolzens, der beim Auflaufen der Kette auf die Umlenkräder mit diesem unter hoher Belastung in Eingriff kommt, einen größeren Durchmesser aufweist als die beiden jeweils im Bereich einer Außenlasche liegenden Bolzenendabschnitte. Diese mittlere Durchmesservergrößerung dient nicht allein einer Herabsetzung der Flächenpressung in den hochbelasteten Kontaktbereichen (sowie einer damit einhergehenden Vergrößerung des Widerstandsmoments und damit der Biegesteifigkeit), sondern zugleich zur Bildung zweier ringförmiger Anschläge jedes Bolzens, an welche die betreffenden Innenlaschen bei der Montage von außen her angelegt werden können.

Wenn vor- oder nachstehend von einem "Zellenförderer" die Rede ist, so ist hiermit insb. ein auch als "Elevator" bezeichnetes (Ketten-)Becherwerk gemeint, also einer der ältesten Stetigförderer zur senkrechten (Senkrecht-Becherwerk), schrägen (Schräg-Becherwerk) oder waagerechten (Pendel-Becherwerk) Förderung von Schüttgut, dessen Förderzellen (Tragorgane) für das zu fördernde Schüttgut als sog. Becher ausgebildet sind, die i.a. aus Stahl (in geschweißter oder tiefgezogener Bauart), Grau- oder Aluminiumguß, Kunststoff oder Gummi bestehen, und die - abhängig von der Art des zu fördernden Schüttgutes - unterschiedliche Formen (z.B. flach, flachrund, mitteltief, tief mit ebener oder gekrümmter Rückwand) aufweisen können (s. z.B. DIN 15231-15235, 15241-15245, 22201-22203, 22211-22213). Die größte Verbreitung dürfte nach wie vor das Senkrechtbecherwerk haben (s. z.B. VDI-Richtlinie 2324 "Senkrechtbecherwerk"), welches bspw. als Vertikal-Stetigförderer für Zementklinker aus modernen Zementwerken nicht wegzudenken ist.

Zentralkettenbecherwerke werden zwar in der Regel als (Einfach-)Becherwerke mit einem Becherstrang ausgeführt, können jedoch auch als sog. Doppelbecherwerke ausgebildet sein. Dabei sind zwei einsträngige Zentralketten mit jeweiliger Becherbesetzung in einem gemeinsamen Becherwerksgehäuse untergebracht, und werden jeweils von einem Antriebsrad (auf einer gemeinsamen Welle) von nur einem Antrieb gemeinsam angetrieben, während die Spannräder i.a. ja auf gesonderten Wellen sitzen, weil die Kettenlängung der beiden (Zentral-)Ketten unterschiedlich groß sein kann, so daß voneinander unabhängige Spannwege bei einem Doppelbecherwerk höchst zweckmäßig sind.

Als Zugorgan(e) für Becherwerke finden Ketten oder Gurte (früher auch Seile) Verwendung, wobei Ketten (und Seile) ein- und zweisträngig angeordnet sein können und zwar bei einsträngiger Ausbildung als sog. Zentralkette mittig zur Becherrückwand, und bei zweisträngiger Ausbildung in spiegelsymmetrischer Anordnung zur Bechermitte, und zwar entweder ebenfalls an der Becherrückwand oder an den Seitenwänden der Becher.

Die endlos gemachten Zugorgane werden an den Enden der Förderstrecke, also am Kopf und Fuß des Becherwerkes, über Rollen, Räder in der Ausbildung als Kettenräder bzw. profilierte Räder oder Trommeln geführt und dort jeweils umgelenkt, wobei i.a. der Antrieb am Kopf und die erforderliche Vorspannung des Zugorgans am Fuß erfolgt. Die Umlenkorgane werden nachstehend - unabhängig von ihrer konkreten Ausbildung - allgemein als "Umlenkräder" (bzw. als "Antriebsrad" bzw. "Spannrad") bezeichnet.

Das zu fördernde Schüttgut wird den Bechern durch Aufgabevorrichtungen zugeführt, wie z.B. durch Zulaufschurren oder Schwingförderer (Aufgabe-Becherwerk), oder es wird von den Bechern im Becherwerksfuß (aus dem sog. "Sumpf") geschöpft (Schöpf-Becherwerk), wobei Schöpf-Becherwerke bevorzugt für feinkörnige Schüttgüter eingesetzt werden, da die Schöpfkräfte und damit die Beanspruchungen des Zugorgans und der Becher bei grobstückigen Materialien sehr groß werden.

Das Entleeren der Becher erfolgt entweder durch Schwerkraft (Langsam-Läufer) oder durch Fliehkraft (Schnell-Läufer), wobei bei Becherwerken mit Schwerkraftentleerung ein freier oder gelenkter Auswurf möglich ist.

Ketten-Becherwerke haben als Zugorgane Glieder- oder Gelenkketten, wobei die Gliederketten als Rundgliederketten (Rundstahlketten) oder Stegketten ausgebildet sein können, die in der Fördertechnik i.a. als Hand- oder Lastketten bei Hebezeugen Verwendung finden, während die in verschiedenen Ausführungen bekannten Gelenkketten insb. als Getriebeketten, auch als Lastketten, sowie als Förderketten für Kettenförderer in Frage kommen.

Die einfachste (und billigste) Bauart der Gelenkketten stellen die Bolzenketten dar. Ihre Laschen drehen sich i.d.R. unmittelbar auf endseitig (z.B. durch Niete oder Splinte) gegen ein Verschieben in Längsrichtung gesicherten (Ketten-)Bolzen.

Zn den Bolzenketten gehören insb. die Gallketten (s. z.B. DIN 8150) mit mehreren Innen- und Außenlaschen je Glied, weiterhin die Fleyerketten (s. z.B. DIN 8152), sowie die sog. Ziehbankketten ohne Buchsen (DIN 8156) oder mit Buchsen (DIN 8157), wobei die Fleyerketten zylindrische Bolzen mit durchgehend konstantem Durchmesser aufweisen, während der Bolzendurchmesser bei den anderen vorgenannten Bolzenketten-Typen an den Bolzenendabschnitten i.a. kleiner als im mittleren Bolzenbereich ist, der sich zwischen den Innenlaschen erstreckt.

Wie weiter oben bereits ausgeführt worden ist, bezieht sich die vorliegende Erfindung zwar in erster Linie auf eine Gelenkkette für ein (Ketten-)Becherwerk, und dabei wiederum insb. auf ein einsträngiges Becherwerk mit mittig zu den Bechern angeordneter Zentralkette, darüber hinaus aber ganz allgemein auf Zellenförderer der oben beschriebenen Gattung, auch wenn diese im engeren Sinne der üblichen fördertechnischen Terminologie nicht als "Becherwerke" bezeichnet werden. Das ist bspw. der Fall, wenn die Förderstrecke eines Zellenförderer horizontal verläuft, und die Förderzellen (auch wenn sie becherartig ausgebildet sind) aber nicht (wie bei einem Pendel-Becherwerk) pendelnd am Zugorgan befestigt, sondern fest mit diesem verbunden sind. Wenn vor- oder nachstehend (ggf. beispielhaft) von einem "Becherwerk" die Rede ist, so ist damit stets ganz allgemein ein Zellenförderer gemeint.

Bolzenketten insb. in der Ausbildung als Gallsche Ketten sind durch Leonardo da Vinci bereits seit mehr als 500 Jahren bekannt. Sie bestehen grundsätzlich aus abwechselnd aufeinanderfolgenden inneren und äußeren Kettengliedern, die jeweils - wie oben bereits beschrieben worden ist - aus einem Paar Innenlaschen bzw. einem Paar Außenlaschen bestehen, welche die beiden benachbarten Innenlaschenpaare jeweils überlappen und mit diesen in den beiden Überlappungsabschnitten jeweils durch einen quer zur Ketten-Längsrichtung verlaufenden Kettenbolzen gelenkig verbunden sind, wie dieses bspw. von einer Fahrradkette her ganz allgemein bekannt ist. Dabei besteht ein vollständiges Kettenglied - wie vorstehend definiert - aus einem inneren Kettenglied und einem äußeren Kettenglied.

Außer den Bolzenketten umfassen die Gelenkketten noch Buchsenketten sowie Rollenketten, deren Bolzen sämtlichst - wie bei der Fleyerkette - einen konstanten Durchmesser aufweisen.

Die Buchsenketten haben grundsätzlich gegenüber den Bolzenketten eine höhere Verschleißfestigkeit, da ihre Innenlaschen auf (Innen-)Buchsen gepreßt sind, die beweglich auf den mit den Außenlaschen fest verbundenen Bolzen sitzen, wodurch die Flächenpressung deutlich kleiner wird. Buchsenketten (s. z.B. DIN 8154 und 8164) werden i.a. für kleine Teilungen ausgeführt und benutzt. Zu ihnen zählen auch die sog. "Förderketten mit Vollbolzen" sowohl ohne Rollen (DIN 8165, 8167, 8175, 8176) als auch mit Rollen (DIN 8165, 8167, 8176), sowie die sog. "Förderketten mit Hohlbolzen" mit und ohne Rollen (DIN 8168), und die sog. "Förderketten mit Befestigungslaschen" (DIN 8165, 8167, 8168).

Buchsenketten erschienen der einschlägigen Industrie aufgrund der vorgenannten (insb. Verschleiß-)Eigenschaften daher bisher auch für Förderketten von Ketten-Becherwerken den Bolzenketten (weit) überlegen, und zwar nicht nur früher (d.h. bis in die 70er/80er Jahre des vergangenen Jahrhunderts, als Gelenkketten vorwiegend bei langsamlaufenden Becherwerken mit Schwerkraftentleerung eingesetzt wurden und für Schnell-Läufer mit Fliehkraftentleerung fast ausschließlich Gliederketten in der Ausbildung als Rundglieder- bzw. Rundstahlketten Verwendung fanden), sondern auch nachdem sie aufgrund der Fortentwicklung zwischenzeitlich regelmäßig für schnellaufende Becherwerke u.dgl. bevorzugt eingesetzt werden.

Dabei kam es aber insb. bei Ketten-Becherwerken mit Zentralkette trotz an sich geeigneter Werkstoffauswahl und hoher Fertigungsqualität immer wieder (und nicht selten häufig bzw. umfänglich) zu Brüchen der die mittleren Bolzenabschnitte (zwischen den Innenlaschen) umgebenden Innenbuchsen, und zwar selbst (schon) dann, wenn die Innenbuchsen aufgrund ihrer Oberflächenhärtung (die zwecks Verschleißminimalisierung i.d.R. sowohl an ihrem mit den Umlenkrädern in Eingriff kommenden Außenmantel, als auch an ihrem mit einem mittleren Kettenbolzenabschnitt in Eingriff stehenden Innenmantel vorgenommen wird) noch nicht/kaum verschlissen waren.

Man hat daher versucht, diesem Übelstand durch noch bessere (festere) Werkstoffe zu begegnen, doch brachte diese Maßnahme keine entscheidende Abhilfe. Im Gegenteil: Das Auftreten von Innenbuchsenbrüchen schien häufig mit hochwertiger Werkstoffauswahl noch zu steigen.

Zur Erklärung dieses überraschenden Phänomens - über welches in der einschlägigen Fachwelt sowohl bei den Kettenherstellern als auch den fördertechnischen Unternehmen (als deren für die Funktionsfähigkeit ihrer Förderer letztlich verantwortliche Abnehmer) sowie den Anwendem schon mit Galgenhumor gewitzelt worden, und der Begriff des "The better - the worst - Phänomens" geprägt worden ist - sei an dieser Stelle bereits eine der vorliegenden Erfindung u.a. zugrundeliegende Erkenntnis vorweggenommen: Vermutlich beruhen diese höchst mißlichen Innenbuchsen-Brüche darauf, daß die Innenbuchsen von Buchsenketten - insb. bei relativ hoher Belastung in Relation zu ihrer jeweils durch die Materialauswahl und Dimensionierung vorgegebenen Bruchfestigkeit - die jeweils beim Auflaufen auf ein Umlenkrad auftretenden Impulse (Stöße) - trotz weitgehender konstruktiver gegenseitiger Anpassung mit entsprechender Stoßmilderung - schlecht vertragen, und zwar insb. wohl deshalb, weil zwischen den gehärteten Bereichen am Außenmantel und am Innenmantel der Innenbuchsen bei gebotener Härtungstiefe von jeweils einigen Millimetern kaum noch ein zähelastischer (zylindrischer) "Kern" verbleibt, so daß die Innenbuchsen zwar (sowohl außen als auch innen) sehr verschleißfest sind, dabei aber (fast) durchgehend spröde und dementsprechend stoßempfindlich. Obwohl die Innenbuchsen von Buchsenketten als glatte, durchgehende Zylinder an sich kerbfrei sind, kommt es im rauhen Betrieb offenbar dennoch aufgrund der gehärteten, spröden Außen- und Innenbereiche der Innenbuchsen bzw. des nur geringen verbleibenden zähelastischen "Kernbereiches" bei den periodisch auftretenden Stoßbeanspruchungen zu feinen Kerbrissen, und letztlich in relativ großer Zahl zu Dauerbrüchen. Jeder Schadensfall ist aber gerade bei einem (bspw. in einem Zementwerk eingesetzten) Becherwerk besonders mißlich und - außer den eigentlichen Reparaturkosten - mit erheblichen mittelbaren Folgekosten aufgrund des mit einer Reparatur verbundenen Betriebsausfalls verknüpft.

Den Rollenketten (s. z.B. DIN 8187, 8188) kommt wegen ihres annähernd unbeschränkten Anwendungsbereiches allgemein die größte Bedeutung zu, obwohl sie die teuerste Ausführung der (Stahl-)Gelenkketten darstellen. Ihr Unterschied zu den Buchsenketten besteht insb. in auf den Buchsen gelagerten, gehärteten (und i.a. geschliffenen) (Schon-)Rollen zur Verschleiß- und Geräuschminderung. Ihre aufwendige Herstellung erlaubt zwar bspw. für Antriebsketten große Leistungen bis über 1.000 kW und hohe Kettengeschwindigkeiten bis zu 30 m/s, doch macht ihre relativ aufwendige Fertigung und ihr Aufbau sie für rauhe Betriebsverhältnisse, wie sie häufig in der Fördertechnik vorliegen (abgesehen von dem hohen Preis) oft weniger geeignet bis (völlig) ungeeignet, weil ihre aufwendig gefertigten Gleitflächen nicht hinreichend gegen ein Eindringen von Schüttgut(staub) oder sonstigen Verunreinigungen zu schützen sind, so daß sich dann aufgrund hohen Verschleißes eine wirtschaftlich nicht akzeptable, zu niedrige Standzeit ergibt.

Da die Außenlaschen von Gelenkketten die ihnen jeweils zugeordneten Innenlaschen an ihren Endabschnitten überlappen, und i.a. eng benachbart zu den Außenseiten der ihnen benachbarten Innenlaschen angeordnet sind, und da sich die Kettenbolzen i.a. weitgehend spielfrei mit relativ enger Passung durch die entsprechend ausgebildeten Laschen-Durchgangsbohrungen erstrecken, haben Gelenkketten gegenüber den allseitig beweglichen Gliederketten nur eine geringe Querbeweglichkeit. Gelenkketten vertragen zwar in Querrichtung keinen erheblichen Schrägzug, bilden aber aus demselben Grunde eine gute (ggf. mittige) Führung gegen ein seitliches Auswandern, wie diese insb. für ein Kettenbecherwerk mit Zentralkette höchst wünschenswert bzw. erforderlich ist, da die Kette im übrigen i.a. lediglich an den an den Enden der Förderstrecke befindlichen Umlenkrädern (formschlüssig) geführt ist.

Wenigstens eines der Umlenkräder eines Kettenbecherwerkes ist i.a. als Kettenrad ausgebildet. Dabei muß es sich nicht notwendigerweise um das Antriebsrad handeln, an dem die Antriebskraft in die als Zugorgan(e) wirkende(n) Kette(n) eingeleitet wird, auch wenn diese bei einem großen Zellenförderer erhebliche Werte annimmt.

Obwohl Gurt-Becherwerken für größere Förderhöhen und Fördergutströme nicht zuletzt auch wegen ihrer höheren Laufruhe im Vergleich zu Ketten-Becherwerken nach wie vor quantitativ die größte Bedeutung zukommen dürfte, sind sie für bestimmte Einsatzfälle, wie insb. einen Heißguttransport, regelmäßig nicht einsetzbar (s. z.B. Z. "Zement, Kalk, Gips", 1974, H. 4, S. 176 - 181), so daß dem kettengetriebenen Zellenförderer, wie bspw. dem Kettenbecherwerk, nach wie vor eine erhebliche Bedeutung zukommt, und damit insb. auch seiner als Zugorgan sowie Tragmittel für die Förderzellen dienenden Kette.

Gelenkketten für Zellenförderer wie insb. Becherwerke werden bisher durchgängig als Buchsenketten ausgebildet (s. z.B. DE 35 03 302 C2, DE 42 33 550 C2, EP 0 662 924 B1 oder Prospekt der Fa. RUD-Kettenfabrik Rieger & Dietz GmbH & Co./Beumer "Zentralkette für Hochleistungsbecherwerke" vom April 1994), wobei den Kettengliedern i.a. jeweils außerhalb der Außenlaschen auf den Bolzenendabschnitten angeordnete gesonderte Befestigungswinkel zugeordnet sind, mittels welcher die Förderzellen an der Kette zu befestigen sind.

Es sind jedoch auch (Buchsen-)Förderketten bekannt, bei denen die Außenlaschen der Kette im Querschnitt L-förmig ausgebildet sind, und zugleich als Befestigungswinkel dienen (s. z.B. Bulletin No. 5014 "Rex Elevator and Drag Chains - Cement Industry Chains and Accessoirs" der Rexnord Corporation, USA, 5/96).

Bei diesen Buchsenketten traten/treten bisher jedoch die oben bereits eingehend beschriebenen Nachteile (Brüche der Innenbuchsen) auf. Ein versuchsweiser Ersatz durch Bolzenketten hat nicht zu befriedigenden Ergebnissen geführt, so daß die Fachwelt bisher bei Buchsenketten verblieben ist, und die damit verbundenen Nachteile und Kosten - wenngleich höchst widerwillig - in Kauf genommen hat.

Aus der EP 0 767 114 A1 ist eine Laschenkette für Becherwerke bekannt, bei welcher die Innenlaschen zusammen mit jeweils zwei Kettenbolzen eine vorgefertigte, rahmenförmige Baugruppe bilden, mit der die Buchsen zur Befestigung der Laschenkette an becherseitigen Anschlußstegen versehenen Außenlaschen durch eine kombinierte Steck- und Schwenkbewegung verbindbar sind. Dabei sind die Innenlaschen drehfest mit den Kettenbolzen verbunden, und zwar sind letztere bevorzugt in Bohrungen der Innenlaschen eingepreßt.

Das Besondere gegenüber dem Stand der Technik liegt bei dieser bekannten Laschenkette offenbar darin, daß der Außendurchmesser des mit den Innenlaschen verbundenen Abschnittes des Kettenbolzens gleich dem Außendurchmesser der mit der Außenlasche verbundenen Buchsen ist, und/oder daß die Außen- und Innenlaschen identisch ausgebildet sind, obwohl diese beiden Maßnahmen im Stand der Technik ebenfalls bereits an sich bekannt sind. Denn die übrigen Merkmale dieser vorbekannten Laschenkette finden sich bereits in einer Buchsenförderkette der Fa. Ketten-Wulf, 59889 Eslohe-Kückelheim, aus dem Jahre 1986, die seinerzeit insbes. in der Kfz-Industrie umfänglich als Förderkette vorbenutzt worden ist.

Der vorliegenden Erfindung liegt die Aufgabe zugrunde, die vorbeschriebene Gelenkkette insb. dahingehend zu verbessern, daß sie - trotz der i.a. sehr rauhen Betriebsbedingungen bei ihrem vorgesehenen Einsatz als Förderkette für Becherwerke od.dgl. - i.w. die erheblichen Vorteile einer Bolzenkette gegenüber einer Buchsen- oder Rollenkette (insb. sehr einfache und billige Bauart), aber dennoch eine gegenüber konventionellen Bolzenketten erheblich gesteigerte Verschleißfestigkeit (und damit eine entsprechend hohe Standfestigkeit bzw. Lebensdauer) aufweist, jedoch erheblich betriebssicherer als eine Buchsenkette, und dabei dennoch weitgehend wartungsfrei ist, wobei bei großer Montage- und Demontagefreundlichkeit (ohne Spezialwerkzeuge) zur weiteren Erhöhung der Lebensdauer außerdem ein Wenden der Kette möglich sein soll.

Die Lösung dieser Aufgabe erfolgt erfindungsgemäß durch die Merkmale des Anspruches 1. Bevorzugte Ausgestaltungen sind in Unteransprüchen beschrieben.

Die erfindungsgemäße Förder-Gelenkkette stellt ersichtlich gleichsam eine neue Zwischenform zwischen einer klassischen Bolzenkette und einer Buchsenkette dar, weil einerseits keine jeweils den mittleren Bolzenabschnitt umgebenden Innenbuchsen vorhanden sind, wie sie gattungstypisch für eine Buchsenkette sind, andererseits aber die Bolzenlagerung nicht wie bei einer konventionellen Bolzenkette in den Laschen erfolgt (dort ggf. in in die Laschenbohrungen eingepreßten, zylindrischen Lagerschalen), sondern in topfförmigen, fest mit den Außenlaschen verbundenen Außenbuchsen, wie dieses von Buchsenketten z.T. an sich bekannt ist, nämlich dann (und nur dann), soweit dort von "schwimmenden" Bolzen Gebrauch gemacht worden ist, die in der jeweils von zwei Außenbuchsen und einer zu diesen fluchtenden Innenbuchse gebildeten, völligen Buchsen-Einkapselung frei drehbeweglich und begrenzt axialbeweglich sind. Man könnte die erfindungsgemäße Gelenkkette mithin als "Außenbuchsen-Bolzenkette" o.ä. bezeichnen, wobei verschiedene Vorteile dieses neuen (Förder-)Kettentyps für den Fachmann sogleich evident sind: Der Kettenaufbau ist annähernd so einfach und preiswert wie bei einer konventionellen Bolzenkette und erheblich einfacher/preiswerter als bei einer konventionellen Buchsenkette. Dabei ist zugleich das Metergewicht bei gleicher Bruchlast deutlich kleiner (z.B. bei einer Bruchlast von 1.200 kN deutlich kleiner als 80 kg/m), und aufgrund der Selbstschmierung der eingekapselten Lagerflächen praktisch keine Wertung erforderlich. Der bei konventionellen Bolzenketten auftretende relativ hohe Verschleiß (im Vergleich zu Buchsenketten) ist aufgrund der erfindungsgemäß vorgesehenen Maßnahmen ganz erheblich reduziert, wobei trotz der bei Bolzenketten an sich ungebräuchlichen Durchmessersprünge der Bolzen dennoch keine Dauerbrüche zu befürchten sind.

Letzteres wird insb. auch dadurch erzielt, daß die (wie bei i.a. bei einer Bolzenkette) oberflächengehärteten Kettenbolzen nicht nur an ihrer Außenseite bzw. den sich hieran nach innen anschließenden benachbarten Bereichen gehärtet sind, und - insb. in den hochbelasteten Kontaktzonen - einen erheblichen zähelastischen Kern aufweisen, sondern dabei auch Zonen unterschiedlicher Härtetiefe, sowie in Kerbbereichen keine Härtung, wodurch Dauerbrüche - trotz unterschiedlicher Durchmesser der einzelnen Bolzenabschnitte - mit hoher Sicherheit zu meiden sind.

Die Zweckmäßigkeit einer Verwendung von Bolzen, deren Durchmesser an den Bolzenendabschnitten jeweils kleiner als am benachbarten, weiter zur Mitte hin liegenden Bolzenabschnitt ist, ergibt sich u.a. daraus, daß bevorzugt jeweils zwischen einem im Bereich einer Innenlasche befindlichen Abschnitt eines Bolzens und dem sich daran nach außen anschließenden Endabschnitt des Bolzens eine Labyrinthdichtung angeordnet bzw. ausgebildet ist. Dieses ist schon deshalb höchst weckmäßig, um ein Eindringen von Fördergut bzw. Fördergutstaub oder sonstigen Verunreinigungen in diesen Bereich zu verhindern bzw. zumindest zu erschweren, und damit die Verschleißfestigkeit sowie hiermit letztlich die Standzeit zu erhöhen. Dabei erstrecken sich die topfförmigen Außenbuchsen bevorzugt jeweils von außen bis etwas über den betreffenden Kettenbolzenendabschnitt hinaus nach innen, und weisen an ihrem innenliegenden Endabschnitt einen dem dortigen Bolzendurchmesser entsprechenden, größeren Innendurchmesser auf, wobei die Außenbuchsen zweckmäßigerweise jeweils mit ihrer stirnseitigen Ringfläche unter Bildung eines schmalen Spaltes eng benachbart (oder unmittelbar benachbart/anliegend) zur Außenseite der betreffenden Innenlasche angeordnet sind.

Die Außenbuchsen sind schon deshalb bevorzugt topfförmig ausgebildet (auch wenn sie aus Gründen der Fertigungskosten i.w. aus rohrfömigen Halbzeugen gefertigt werden können, und dann an ihrem freien äußeren Ende durch einen vorzugsweise eingepreßten Deckel verschlossen sind), um auch dort ein Eindringen von Fördergut oder sonstigen Verunreinigungen zu verhindern.

Weiterhin ist erfindungsgemäß vorgesehen, die Außenbuchsen bzw. die Lagerflächen der in ihnen angeordneten Bolzenendabschnitte von den Bolzenenden her selbsttätig zu schmieren. Um dieses zu erreichen, steht bevorzugt die Innenseite des Bodens einer topfförmigen Außenbuchse bzw. ihres Deckels jeweils im montierten Zustand unter Bildung einer mit einem Schmiermittel, wie Fett, zu füllenden Fettstoffkammer im Abstand zur Stirnseite des betreffenden Kolbenbolzens.

Zwecks besonders einfacher und zweckmäßiger Montage (und ggf. erforderlich werdender Demontage), die ohne gesonderte Spezialwerkzeuge möglichst sein soll, sind die Lagerbuchsen jeweils am inneren Endabschnitt ihrer äußeren Mantelfläche mit einem etwas größeren Außendurchmesser als an ihrem übrigen Abschnitt versehen, dessen Außendurchmesser gleich dem Bohrungsdurchmesser der von dem Befestigungswinkel gebildeten Außenlasche ist, wie dieses weiter unten an einem Ausführungsbeispiel noch weiter erläutert wird.

Zu dem gleichen Zwecke sind die Bolzen bevorzugt jeweils an ihren beiden Endabschnitten - mit geringem Abstand zu ihrer betreffenden Stirnfläche - mit einer umlaufenden Nut versehen, in der jeweils ein bevorzugt (radial-)elastischer Rastring angeordnet ist, und die Außenbuchsen sind jeweils an ihrem Innenmantel mit einer entsprechenden Nut versehen, in welche der Rastring bei der Montage einrasten kann, so daß auf einfachste Art und Weise eine definierte (lösbare) Montage ermöglicht wird.

Die vorgenannten und weitere bevorzugte Ausgestaltungen der vorliegenden Erfindung sind in den Unteransprüchen beschrieben.

Die Erfindung wird - wie bereits angekündigt - nachfolgend an Ausführungsbeispielen unter Bezugnahme auf eine Zeichnung weiter erläutert, wobei diverse Merkmale dieser Ausführungsbeispiele nicht nur spezieller Natur sind, sondern ganz allgemein für die vorliegende Erfindung kennzeichnend. Es zeigt:
- **Fig. 1:**: einen (kurzen) Abschnitt der erfindungsgemäßen Gelenkkette in perspektivischer Darstellung;
- **Fig. 2:**: eine vergrößerte Seitenansicht auf den Kettenabschnitt gem. Fig. 1 in Richtung des Pfeiles II in Fig. 1 bzw. in Fig. 3 gesehen;
- **Fig. 3:**: eine Draufsicht auf den Kettenabschnitt gem. den Fig. 1 und 2 (im Maßstab der Darstellung gem. Fig. 2) in Richtung des Pfeiles III in Fig. 2 gesehen;
- **Fig. 4:**: einen Schnitt durch die Darstellung gem. Fig. 2 in Richtung der Schnittlinie IV-IV gesehen;
- **Fig. 5:**: die in Fig. 4 mit einem strichpunktierten Kreis eingerahmte Einzelheit V in vergrößerter Darstellung;
- **Fig. 6:**: die in Fig. 4 mit einem strichpunktierten Kreis umrahmte Einzelheit VI in vergrößerter Darstellung; und
- **Fig. 7:**: eine Draufsicht auf einen Zentralschnitt durch einen Kettenbolzen in gegenüber den Fig. 1 - 4 vergrößerter Darstellung.

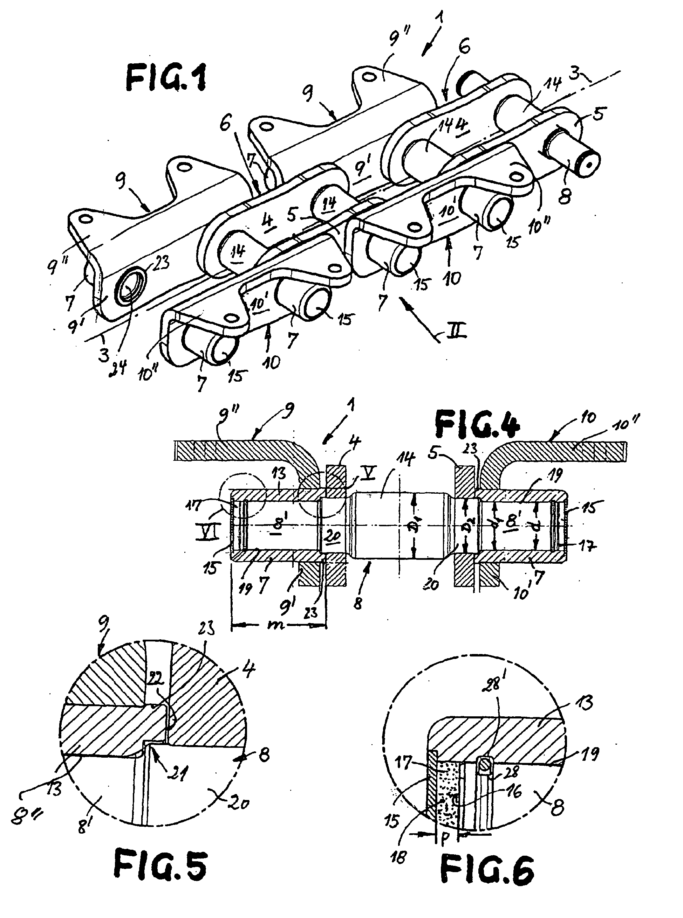

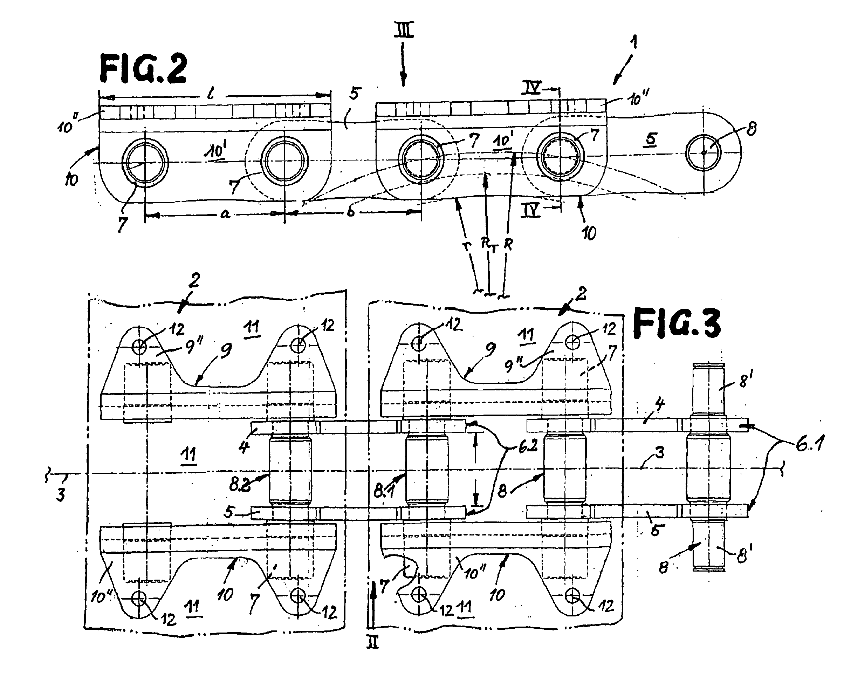

Die Fig. 1 - 4 zeigen einen kurzen Abschnitt einer im ganzen mit 1 bezeichneten erfindungsgemäßen Gelenkkette für einen im übrigen i.w. nicht dargestellten Zellenförderer, dessen aus der Kette 1 und einer Vielzahl von an dieser in Reihe hintereinander befestigten Förderzellen 2 (die lediglich in Fig. 3 mit Strich-Zweipunkt-Linien angedeutet sind) bestehender, endloser Förderstrang zwei an den Enden der Förderstrecke angeordnete, ebenfalls nicht dargestellte Umlenkräder umläuft, von denen das am Fuß der Förderstrecke angeordnete eine Umlenkrad als verzahntes Kettenkrad ausgebildet ist, mittels dessen (und einer geeigneten Spanneinrichtung) die Kette 1 zugleich in ihrer Längsrichtung gespannt wird, während das am Kopf der Förderstrecke angeordnete andere Umlenkrad (Antriebsrad) angetrieben ist, also außer seiner Umlenkfunktion für die endlose Kette 1 auch die Antriebsfunktion innehat, und nicht verzahnt ist, sondern in bekannter Weise eine profilierte Mantelfläche aufweist, deren Umfang - unter Anpassung an die Kettenkonfiguration - im mittleren Mantelbereich etwas größer als an den beiden Mantel-Randabschnitten ist, um auf diese Weise einen ausreichenden Reibschluß zwischen Kette 1 und Antriebsrad zu bewirken, durch welchen das erforderliche Antriebsmoment vom Antrieb über das Antriebsrad auf die Kette 1 zu übertragen ist, wie dieses bspw. aus dem oben bereits benannten RUD/Beumer-Prospekt "Zentralkette für Hochleistungsbecherwerke" bekannt ist.

Konkret betrifft das in der Zeichnung dargestellte Ausführungsbeispiel eine Gelenkkette 1 für ein einsträngiges Kettenbecherwerk mit mittiger Zentralkette, bei dem die Förderzellen 2 mithin aus Bechern bestehen.

Die Gelenkkette 1 weist eine Vielzahl paarweise mit gegenseitigem Querabstand c parallel zueinander sowie parallel zur Ketten-Längsachse 3 angeordnete Flacheisen-Innenlaschen 4, 5 auf, die jeweils unter Bildung eines inneren Kettengliedes 6 an ihren Endabschnitten durch zwei rechtwinklig zur Ketten-Längsachse 3 in einer Ebene verlaufende, in äußeren Lagerbuchsen (Außenbuchsen) 7 gelagerte Bolzen 8 miteinander verbunden sind, welche sich jeweils durch die beiden ihnen zugeordneten Innenlaschen 4, 5 eines Innenlaschenpaares 4, 5 sowie durch zwei Außenlaschen 9, 10 erstrecken, die jeweils zwei einander in Ketten-Längsrichtung 3 benachbarte Innenlaschen 4, 5 zweier einander benachbarter innerer Kettenglieder 6, 6 gelenkig miteinander verbinden.

Die Kette 1 ist mit jedem Becher 2 des Becherwerkes durch zwei i.w. L-förmige Befestigungswinkel fest verbunden, die von den Außenlaschen 9, 10 der Kette 1 gebildet werden, also mit diesen identisch sind. Der parallel zu den Innenlaschen 4, 5 bzw. zur Ketten-Längsachse 3 verlaufende eine Schenkel 9' bzw. 10' der Außenlaschen 9 bzw. 10 (= Befestigungswinkel) ist von zwei einander benachbarten Bolzen 8.1, 8.2 zweier einander benachbarter (innerer) Kettenglieder 6.1, 6.2 durchsetzt. Im Montagezustand (s. Fig. 1 - 4) verläuft der andere (Befestigungs-)Schenkel 9" bzw. 10" parallel zur Außenseite der Becherrückwand 11, und wird an dieser mit nicht dargestellten Schraubverbindungen befestigt, deren Schrauben sich durch Durchgangsbohrungen 12 erstrecken, von denen in jedem Befestigungschenkel 9" bzw. 10" zwei vorgesehen sind.

Die Außenbuchsen 7 für die Bolzen 8 bestehen jeweils insgesamt lediglich aus zwei jeweils einem Bolzenendabschnitt 8' zugeordneten, i.w. rohrförmigen Materialabschnitten 13 (äußere "Gelenkbuchsen"), deren lichter Innendurchmesser d nur geringfügig größer ist als der Außendurchmesser d₁ der Bolzenendabschnitte 8', wobei die Länge m der rohrförmigen Abschnitte 13 (und damit auch der Außenbuchsen 8) jeweils etwa gleich der Länge des über die Außenseite der jeweiligen Innenlasche 4 bzw. 5 nach außen vorstehenden Bolzenendabschnittes 8' ist (zuzüglich der Innenlaschendicke und eines geringfügigen Zuschlages), jedenfalls nur so groß, daß der zwischen zwei einander zugeordneten Innenlaschen 4, 5 liegende mittlere Abschnitt 14 eines Kettenbolzens 8 jeweils frei, d.h. nicht von einer (inneren) Buchse überdeckt ist.

Wie insb. aus Fig. 4 erkennbar ist, erstrecken sich die jeweils i.w. eine Außenbuchse 7 für einen Bolzenendabschnitt 8' bildenden rohrförmigen Abschnitte 13 jeweils - von außen gesehen - bis geringfügig über die Innenseite der Schenkel 9' bzw. 10' der Außenlaschen 9 bzw. 10 nach innen hinaus. Sie sind mit dem ihnen zugeordneten Schenkel 9' bzw. 10' der zugleich einen Befestigungswinkel bildenden Außenlasche 9 bzw. 10 fest durch Verpressung verbunden.

Um ein Eindringen von Fördergut bzw. Fördergutstaub oder sonstigen Verunreinigungen von außen zu den Lagerstellen zu verhindern, sind die Außenbuchsen 7 zum einen topfförmig ausgebildet, d.h. an ihren äußeren Ende geschlossen, und zwar durch Einpressen eines Deckels 15 in eine entsprechende Ausnehmung am freien äußeren Ende des rohrförmigen Abschnittes 13 (s. insb. Fig. 1, 4 und 6).

Die Innenseite des Deckels 15 der topfförmigen Außenbuchsen 7 steht im montierten Zustand im Abstand p zur jeweiligen Stirnseite 16 des Bolzens 8 und bildet dadurch eine Fettstoffkammer 17, die bei der Montage mit einem geeigneten Schmiermittel 18 gefüllt wird, welches während des Betriebes bei entsprechender Erwärmung nach und nach in den Spalt 19 zwischen den Gleitflächen des jeweiligen Bolzenendabschnittes 8' und der zugehörigen Außenbuchse 7 dringen kann, wodurch eine entsprechende Wartung entfällt.

Um ein Eindringen von Fördergut bzw. Fördergutstaub oder sonstigen Verunreinigungen von außen in die Lagerspalte 19 zu verhindern bzw. zumindest auf ein unschädliches Maß zu reduzieren, sowie damit den Bolzen- und Buchsenverschleiß an den Lagerflächen äußerst klein zu halten, und damit die Standzeit entsprechend zu erhöhen, ist jeweils zwischen einem im Bereich einer Innenlasche 4 bzw. 5 befindlichen Abschnitt 20 eines Bolzens 8 und dem sich daran nach außen anschließenden Endabschnitt 8'des Bolzens 8 eine Labyrinthdichtung 21 ausgebildet (s. insb. Fig. 5). Hierfür ist der Bolzen 8 an seinen Endabschnitten 8' jeweils mit einem Durchmesser d versehen, der kleiner als am benachbarten Zwischen-Bolzenabschnitt 20 ist, wobei der rohrförmige Abschnitt 13 der Außenbuchse 7 sich jeweils von außen etwas über den Bolzenendabschnitt 8' hinauserstreckt, und an seinem innenliegenden Endabschnitt einen entsprechend größeren Innendurchmesser aufweist, und wobei die Außenbuchse 7 jeweils mit ihrer stirnseitigen Ringfläche 22 unter Bildung eines sehr schmalen Spaltes eng benachbart zur Außenseite der betreffenden Innenlasche 4 bzw. 5 angeordnet ist.

Wie ebenfalls besonders deutlich aus Fig. 5 hervorgeht, aber auch bspw. in den Fig. 1, 2 und 4 erkennbar ist, weisen die Außenbuchsen 7 jeweils am inneren Endabschnitt ihrer äußeren Mantelfläche einen etwas größeren Außendurchmesser auf als an ihrem übrigen Abschnitt, dessen Außendurchmesser gleich dem Bohrungsdurchmesser der jeweiligen Außenlasche 9 bzw. 10 ist. Hierdurch wird ein ringförmiger Vorsprung 23 gebildet, der bei der Montage zugleich einen Anschlag bildet, wenn der rohrförmige Abschnitt 13 einer Außenbuchse 7 von innen her in eine Durchgangsbohrung 24 eingepreßt wird.

Abweichend von den Kettenbolzen konventioneller Laschenketten, die als Buchsenketten ausgebildet sind, weisen die Bolzen 8 der erfindungsgemäßen Gelenkkette 1 mithin hinsichtlich ihres Durchmessers mehrfach abgestufte Bolzen 8 auf, wobei der Durchmesser D₁ im mittleren Abschnitt 14, der während des Betriebes ohne Umhüllung durch eine Innenbuchse auf die Umlenkräder aufläuft, am größten ist, und bei einer Kette mit einer rechnerischen Bruchkraft von 1.200 kN bspw. 55 mm betragen kann, während der Durchmesser D₂ im Bereich der sich hieran anschließenden Zwischen-Bolzenabschnitte 20 z.B. 46 mm, und der Durchmesser d im Bereich der Bolzenendabschnitte 8' bei einer Bolzen-Gesamtlänge von ca. 270 mm und einer Länge m der Außenbuchse von 75 mm, z.B. 40 mm betragen kann.

Um die während des Betriebes auftretenden erheblichen Kräfte auch in den hoch belasteten Kontaktzonen sicher aufnehmen zu können bzw. einen möglichst geringen Verschleiß zu erzielen, sind die Bolzen 8 (nur) an ihrer Außenseite (abschnittsweise) gehärtet, und weisen insb. in den hochbelasteten Kontaktzonen einen zähelastischen Kern 25 von erheblichem Durchmesser auf.

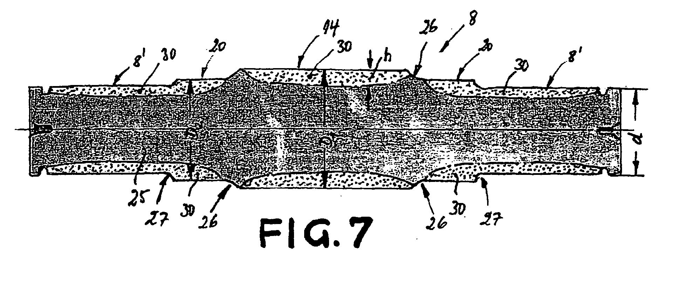

Wie aus Fig. 7 erkennbar ist, ist die Härtetiefe h über die Länge des Bolzens unterschiedlich. Sie beträgt bei dem dargestellten Ausführungsbeispiel max. 6 mm. Die gehärteten Zonen sind in Fig. 7 gegenüber dem grau angelegten, zähelastischen Kern 25 heller dargestellt, mit strichpunktierten Linien zum Kern 25 abgegrenzt und gepunktet, wobei die im Bereich von Durchmesseränderungen liegenden Kerbbereiche 26 nicht oberflächengehärtet sind, um dort die Gefahr von Dauerbrüchen zu minimalisieren. In gleicher Weise kann selbstverständlich auch in den Kerbbereichen 27 zwischen den Bolzenendabschnitten 8' und dem ihnen jeweils benachbarten Zwischen-Bolzenabschnitt 20 ggf. von einer Härtung abgesehen werden, wenn sich dieses aufgrund des gewählten Werkstoffes und der Betriebsbedingungen als geboten zeigen sollte.

Auch die Montage der erfindungsgemäßen Kette 1 ist (ebenso wie deren Demontage) äußerst einfach. Aufgrund des Umstandes, daß die sich von den Außenlaschen 9, 10 nach außen erstreckenden Außenbuchsen 7 mit den Außenlaschen 9 bzw. 10 fest verpreßt sind, können innere Kettenglieder 6 (bestehend aus zwei Innenlaschen 4, 5 und zwei Bolzen 8, 8) mit einem äußeren Kettenglied (bestehend aus einer Außenlasche 9 bzw. 10 sowie zwei Außenbuchsen 7, 7) jeweils sektionsweise zusammengesteckt und montiert werden, wobei auch bereits ohne montierte Förderzellen (Becher) ein Zusammenhalt der Kette 1 sichergestellt wird.

Aufgrund der Ausbildung der (Innen-)Laschen 4, 5 als sog. Flacheisen-Laschen (was in aller Regel zutreffend "Flach-Stahllaschen" lauten müßte) ist eine feine Stufung verschiedener Kettentypen bzw. -größen mit unterschiedlicher Festigkeit (z.B. Bruchlast zwischen 800 und 2.000 kN) unter Beibehaltung des vorstehend beschriebenen und in der Zeichnung dargestellten Gestaltungsprinzip ohne weiteres möglich. Um auch das Verschleißpotential zwischen den Umlenkrädern und der Kette 1 zu optimieren bzw. zu maximieren, ist bei der erfindungsgemäßen Laschenkette 1 das Prinzip der sog. "Dreipunktlagerung" verwirklicht: Im anfänglichen Einlaufzustand soll ein Umlenkrad zunächst mit dem mittleren Bolzenbereich 14 in Kontakt treten. Wenn nach einer bestimmten Betriebszeit zwischen diesen Kontaktpartnern ein gewisser Verschleiß (von bspw. 0,2 mm) aufgetreten ist, sollen auch die Innenlaschen 4, 5 mit den entsprechenden Bereichen der im Durchmesser kleineren Kontaktbereiche des Antriebsrades in Kontakt treten. Zu diesem Zwecke sind die Innenlaschen 4, 5 bereits mit einem Radius R_{T} (bei dem vorliegenden Ausführungsbeispiel von 472,5 mm) ausgenommen (s. Fig. 2), wobei der Teil-Radius R 500 mm beträgt, und der Fuß-Radius r 445 mm.

Abschließend sei noch darauf verwiesen, daß die Laschenkette 1 so gestaltet ist, daß sie durch ein "Umdrehen" der (zugleich die Befestigungswinkel bildenden) Außenlaschen 9, 10 zu wenden ist.

Um die Gelenkkette 1 sektionsweise vormontieren und aus solchen Sektionen zusammenstekken zu können, sind die Bolzen 8 jeweils an ihren beiden Endabschnitten 8' mit geringem Abstand zu ihrer betreffenden Stirnfläche mit einer umlaufenden Nut 28 versehen, in der jeweils ein elastischer Rastring 29 angeordnet ist, wobei die Lagerbuchsen 7 jeweils an ihrem Innenmantel mit einer entsprechenden Nut 28' versehen sind, in welche der Rastring 29 bei der Montage einrastet.

Aufgrund der beschriebenen Merkmale ist die erfindungsgemäße Gelenkkette 1 bisher bekanntgewordenen gattungsgemäßen Gelenkketten ersichtlich in vielfältiger Weise - wie weiter oben im einzelnen beschreiben - überlegen, praktisch wartungsfrei, und aufgrund ihres im Vergleich zum Stand der Technik äußerst einfachen und robusten Aufbaus sowie der relativ einfachen Fertigungs- und Montage- bzw. Demontagemöglichkeiten sowie ihres geringen Metergewichtes von deutlich unter 80 kg bei einer rechnerischen Bruchkraft von bspw. 1.200 kN zudem auch noch in wirtschaftlicher Hinsicht überlegen, und zwar nicht nur aufgrund ihrer geringen Wartungsbedürfnisse, die sich i.w. lediglich auf Sicherheitsinspektionen beschränken, sondern auch wegen ihres geringen Verschleißes und der sich aus all dem letztlich ergebenden hohen Lebensdauer, zumal die bei Buchsenketten gefürchtete Bruchgefahr der Innenbuchsen durch deren ersatzlosen Fortfall eliminiert ist.

### Bezugszeichenliste

- **1**: Gelenk(förder)kette
- **2**: Förderzelle (Becher)
- **3**: Ketten-Längsachse
- **4**: Innenlasche (von 1)
- **5**: Innenlasche (von 1)
- **6**: (inneres) Kettenglied (6.1, 62.)
- **7**: Außenbuchse (Lager-Gelenkbuchse)
- **8**: (Ketten-)Bolzen (8.1, 8.2)
**8'** Bolzenendabschnitt
**8''** Lauffläche (von 8')
- **9**: Außenlasche (von 1)
**9'** Schenkel (von 4, 5)
**9''** (Befestigungs-)Schenkel
- **10**: Außenlasche (von 1)
**10'** Schenkel (von 4, 5)
**10''** (Befestigungs-)Schenkel
- **11**: Rückwand (von 2)
- **12**: Durchgangsbohrungen
- **13**: rohrförmiger Abschnitt (von 7)
- **14**: mittlerer Abschnitt (von 8)
- **15**: Deckel
- **16**: Stirnseite (von 8)
- **17**: Fettstoffkammer
- **18**: Schmiermittel
- **19**: Spalt
- **20**: (Bolzen-)Zwischenabschnitt (von 8)
- **21**: Labyrinthdichtung
- **22**: ringförmige Stirnfläche (von 7)
- **23**: ringförmiger Vorsprung (Anschlag)
- **24**: Durchgangsbohrung
- **25**: (zähelastischer) Kern (von 8)
- **26**: Kerbbereich (von 8)
- **27**: Kerbbereich (von 8)
- **28; 28'**: Nut (von 8 bzw. 7)
- **29**: Rastring
- **30**: Härtungsbereiche (von 8)

- **c**: Querabstand
- **d**: Durchmesser (von 8')
- **D₁**: Durchmesser (von 14)
- **D₂**: Durchmesser (von 20)
- **h**: Härtetiefe
- **m**: Länge (von 7)
- **p**: Abstand
- b: Radius
- **R_{T}**: Radius
- **R**: Radius

## Patentansprüche

1. Gelenkkette (1) in der Art einer Bolzenkette mit topfförmig ausgebildeten Lager-Außenbuchsen (7, 7), in denen jeweils ein Bolzenendabschnitt (8') angeordnet ist, als Förderkette für einen Zellenförderer, dessen aus der Kette (1) und einer Vielzahl von an dieser in Reihe hintereinander befestigten Förderzellen (2) bestehender, endloser Förderstrang um zwei an den Enden der Förderstrecke angeordnete Umlenkräder umläuft, von denen das eine angetrieben ist, und das andere als Spannrad fungiert, insb. für ein Ketten-Becherwerk, insb. ein Einfach- oder Doppel-Becherwerk mit Zentralkette(n), mit einer Vielzahl paarweise mit gegenseitigem Querabstand (c) parallel zueinander sowie zur Ketten-Längsachse (3) und spiegelsymmetrisch zu dieser angeordneter Innenlaschen (4, 5), die jeweils unter Bildung eines inneren Kettengliedes (6) durch zwei rechtwinklig zur Ketten-Längsachse (3) verlaufende Bolzen (8) miteinander verbunden sind, welche sich jeweils durch die beiden ihnen zugeordneten Innenlaschen (4, 5) eines Innen-Laschenpaares (4, 5) sowie zwei Außenlaschen (9, 10) mit i.w. L-förmigem Querschnitt erstrecken, die jeweils zwei einander in Ketten-Längsrichtung (3) benachbarte Innenlaschen (4, 4 bzw. 5, 5) zweier einander benachbarter innerer Kettenglieder (6, 6) gelenkig miteinander verbinden, wobei die Kette (1) mit den Förderzellen (2) des Zellenförderers an deren Rückwand (11) fest zu verbinden ist; wobei der parallel zu den Innenlaschen (4, 5) verlaufende eine Schenkel (9' bzw. 10') jeder Außenlasche (9 bzw. 10) von zwei einander benachbarten Bolzen (8.1, 8.2) zweier einander benachbarter innerer Kettenglieder (6.1, 6.2) durchsetzt ist, und der im Montagezustand parallel zur Außenseite der Rückwand (11) der betreffenden Förderzelle (2) verlaufende andere Befestigungs-Schenkel (9" bzw. 10'') durch Befestigungsmittel wie insb. Schraubverbindungen fest mit einer Förderzellen-Rückwand (11) bzw. einer Halterungsplatte od.dgl. zu verbinden ist, und wobei jeweils der mittlere Abschnitt (14) eines Bolzens (8) einen größeren Durchmesser (D1) aufweist als die beiden Bolzenendabschnitte (8', 8'), wobei die jeweils fest mit einer Außenlasche (9 bzw. 10) verbundenen Außenbuchsen (7, 7) so lang sind, daß die Innenseite ihres Bodens (15) im montierten Zustand jeweils unter Bildung einer mit einem Schmiermittel (18), wie Fett, zu füllenden Fettstoffkammer (17) im Abstand (p) zu einer Stirnseite des betreffenden Kolbenbolzens (8) steht; wobei jeweils zwischen der Lauffläche (8") eines Bolzenendabschnittes (8') und dem sich an diese nach innen anschließenden Bolzenabschnitt (20) eine Dichtung (21) vorhanden ist und wobei zwischen dem mittleren Abschnitt (14) jedes Bolzens (8) und seinen beiden Endabschnitten (8', 8') jeweils ein Bolzen-Zwischenabschnitt (20) vorhanden ist, dessen Durchmesser (D₂) kleiner als der Durchmesser (D₁) in seinem mittleren Abschnitt (14) und größer als der Durchmesser (d) an seinen Endabschnitten (8', 8') ist.

2. Gelenkkette nach Anspruch 1, **dadurch gekennzeichnet, daß** die topfförmigen Außenbuchsen (7) jeweils aus einem rohrförmigen Abschnitt (13) bestehen, an dessen freiem äußeren Ende ein Deckel (15) angeordnet ist.

3. Gelenkkette nach Anspruch 2, **dadurch gekennzeichnet, daß** der Deckel (15) in den rohrförmigen Abschnitt (13) eingepreßt ist.

4. Gelenkkette nach Anspruch 2, **dadurch gekennzeichnet, daß** der Deckel (15) in den rohrförmigen Abschnitt (13) eingeschraubt ist.

5. Gelenkkette nach einem oder mehreren der vorhergehenden Ansprüche, **dadurch gekennzeichnet, daß** die rohrförmigen Außenbuchsen (7) jeweils mit der zugehörigen Außenlasche (9 bzw. 10) fest verpreßt sind.

6. Gelenkkette nach einem oder mehren der vorhergehenden Ansprüche, **dadurch gekennzeichnet, daß** die Dichtung zwischen der Lauffläche (8") jedes Bolzenendabschnittes (8') und dem sich an diese nach innen anschließenden Bolzenabschnitt (20) eine Labyrinthdichtung (21) ist.

7. Gelenkkette nach Anspruch 6, **dadurch gekennzeichnet, daß** die Labyrinthdichtung (21) jeweils zwischen einem Bolzenendabschnitt (8') und einem Bolzen-Zwischenabschnitt (20) ausgebildet ist, wobei sich der rohrförmige Abschnitt (13) der topfförmigen Außenbuchsen (7) jeweils über den betreffenden Bolzenendabschnitt (8') hinauserstreckt, an seinem innenliegenden offenen Endabschnitt einen Innendurchmesser (D₂) aufweist, der dem Durchmesser (D₂) der Bolzen-Zwischenabschnitte (20) entspricht, und die Außenbuchse (7) mit ihrer ringförmigen Stirnfläche (22) an der Außenseite der betreffenden Innenlasche (4 bzw. 5) anliegt, bzw. eng benachbart zu dieser angeordnet ist.

8. Gelenkkette nach einem oder mehreren der vorhergehenden Ansprüche, **dadurch gekennzeichnet, daß** die Außenbuchsen (7) jeweils am inneren Endabschnitt ihrer äußeren Mantelfläche einen größeren Außendurchmesser als an ihrem übrigen Abschnitt aufweisen, dessen Außendurchmesser gleich dem Bohrungsdurchmesser der betreffenden Außenlasche (9'bzw. 10) ist.

9. Gelenkkette nach einem oder mehreren der vorhergehenden Ansprüche, **dadurch gekennzeichnet, daß** die Bolzen (8) jeweils an ihren beiden Endabschnitten (8') - vorzugsweise mit relativ geringem Abstand zu ihrer jeweiligen Stirnfläche - mit einer umlaufenden Nut (28) versehen sind, in der jeweils ein radialelastischer Rastring (29) angeordnet ist; und daß die Außenbuchsen (7) jeweils an ihrem Innenmantel mit einer entsprechenden Nut (28') versehen sind, in welche der Rastring (29) bei der Montage lösbar einrastet.

10. Gelenkkette nach einem oder mehreren der vorhergehenden Ansprüche, **dadurch gekennzeichnet, daß** die in an sich bekannter Weise oberflächengehärteten Bolzen (8) Härtungs-Zonen (30) unterschiedlicher Härtetiefe mit zähelastischem Kern (25) aufweisen, und in Kerbbereichen (26, 27) mit starker, ggf. sprunghafter Durchmesserveränderung (D₁/D₂; D₂/d) nicht gehärtet sind.

11. Gelenkkette nach einem oder mehreren der vorhergehenden Ansprüche, **dadurch gekennzeichnet, daß** bei einem mittleren Bolzendurchmesser von ca. 35 - 70 mm die Härtetiefe (h) etwa 4 - 7 mm beträgt.

12. Gelenkkette nach einem oder mehreren der vorhergehenden Ansprüche, **dadurch gekennzeichnet, daß** sie ( 1 ) ggf. auch zunächst ohne Förderzellen (2) aus vormontierbaren Kettensektionen zu montieren bzw. zu demontieren ist, die jeweils wenigstens aus einem inneren Kettenglied (6), einer Außenlasche (9 bzw. 10) und zwei dieser zugeordneten und bereits mit ihr fest verbundenen Außenbuchsen (7, 7) bestehen.

13. Gelenkkette nach einem oder mehreren der vorhergehenden Ansprüche, **dadurch gekennzeichnet, daß** die Innenlaschen (4, 5) an ihrer dem Antriebsrad zugekehrten Seite mit einem dem Durchmesser des Antriebsrades entsprechenden Radius (R bzw. R_{T} bzw. r) ausgenommen sind.

## Claims

1. A sprocket chain (1) in the form of a bolt chain with outer bearing bushes (7, 7') of pot-shaped construction, in each of which there is disposed a bolt end section (8'), as a conveyor chain for a cellular conveyor, whose endless conveyor run consisting of the chain (1) and a plurality of conveyor cells (2) fixed consecutively thereon rotates around two reversing wheels disposed at the ends of the conveyor section, one such reversing wheel being driven and the other operating as a tensioning wheel, particularly for a chain bucket elevator, particularly a single or double bucket elevator with a central chain or chains, with a plurality of inner plates (4, 5) disposed in pairs with mutual transverse spacing (c) parallel to one another and to the chain longitudinal axis (3) and in mirror-symmetry thereto, said inner plates being interconnected in each case so as to form an inner chain link (6), by means of two chain bolts (8) extending at right angles to the chain longitudinal axis (3), said bolts extending in each case through the two inner plates (4, 5) associated with them and forming part of an inner plate pair (4, 5) and two outer plates (9, 10) of substantially L-shaped cross-section which respectively pivotally interconnect two inner plates (4, 4 and 5, 5 respectively) adjacent one another in the longitudinal direction (3) of the chain, said inner plates being part of two adjacent inner chain links (6, 6), wherein the chain (1) is rigidly connected to the conveyor cells (2) of the cellular conveyor at the back wall (11) thereof; wherein two adjacent bolts (8.1, 8.2) of two adjacent inner chain links (6.1, 6.2) extend through the one limb (9', 10' respectively), extending parallel to the inner plates (4, 5), of each outer plate (9, 10 respectively), and the other fixing limb (9", 10" respectively) extending parallel to the outside of the back wall (11) of the associated conveyor cell (2) in the assembled state is rigidly connected by fixing means, particularly such as screw connections, to a conveyor cell back wall (11) and a mounting plate or the like respectively, and wherein in each case the middle section (14) of a bolt (8) has a larger diameter (D1) than the two bolt end sections (8', 8'), the outer bushes (7, 7) each connected rigidly to an outer plate (9, 10 respectively) being of a length such that the inside of their base (15) in the assembled state is at a distance (p) from an end face of the associated gudgeon bolt (8), in each case with the formation of a grease chamber (17) which is to be filled with a lubricant (18) such as grease; and a seal (21) being present in each case between the contact surface (8") of a bolt end section (8') and the bolt section (20) adjoining the latter inwardly, there being in each case a bolt intermediate section (20) between the middle section (14) of each bolt (8) and its two end sections (8', 8'), the diameter (D₂) of which intermediate section (20) being less than the diameter (D₁) in its middle section (14) and larger than the diameter (d) at its end sections (8', 8').

2. A sprocket chain according to claim 1, **characterised in that** the pot-shaped outer bushes (7) each consist of a tubular portion (13), at the free outer end of which a cover (15) is disposed.

3. A sprocket chain according to claim 2, **characterised in that** the cover (15) is pressed into the tubular portion (13).

4. A sprocket chain according to claim 2, **characterised in that** the cover (15) is screwed into the tubular portion (13).

5. A sprocket chain according to any one or more of the preceding claims, **characterised in that** the tubular outer bushes (7) are each rigidly pressed to the associated outer plate (9, 10 respectively).

6. A sprocket chain according to any one or more of the preceding claims, **characterised in that** the seal between the contact surface (8") of each bolt end section (8') and the bolt section (20) inwardly adjoining the latter is a labyrinth seal (21).

7. A sprocket chain according to claim 6, **characterised in that** the labyrinth seal (21) is in each case formed between a bolt end section (8') and a bolt intermediate section (20), the tubular section (13) of the pot-shaped outer bushes (7) each extending beyond the associated bolt end section (8'), has at its inner open end section an inside diameter (D₂) which corresponds to the diameter (D₂) of the bolt intermediate sections (20), and the outer bush (7) bears by its annular end face (22) against the outside of the associated inner plate (4, 5 respectively), or is disposed closely adjacent the latter.

8. A sprocket chain according to any one or more of the preceding claims, **characterised in that** the outer bushes (7) each have at the inner end portion of their outer surface a larger outside diameter than at the remaining portion, the outside diameter of which is equal to the borehole diameter of the associated outer plate (9, 10 respectively).

9. A sprocket chain according to any one or more of the preceding claims, **characterised in that** the bolts (8) each have at their two end sections (8') - preferably with relatively small spacing from their respective end face - a peripheral groove (28) in which there is disposed in each case a radially elastic detent ring (29); and **in that** the outer bushes (7) each have at their inner surface a corresponding groove (28') in which the detent ring (29) releasably engages on assembly.

10. A sprocket chain according to any one or more of the preceding claims, **characterised in that** the bolts (8), which are surface-hardened in a manner known per se, have hardening zones (30) of different hardness depths with a viscoplastic core (25) and are not hardened in notch zones (26, 27) with a considerable and possibly abrupt diameter variation (D₁/D₂; D₂/d).

11. A sprocket chain according to any one or more of the preceding claims, **characterised in that** the hardness depth (h) is about 4 - 7 mm in the case of an average bolt diameter of about 35 to 70 mm.

12. A sprocket chain according to any one or more of the preceding claims, **characterised in that** it (1) is assembled from pre-assembled chain sections if required without conveyor cells (2) at first or is dismantled therefrom , said sections each consisting of at least one inner chain link (6), an outer plate (9, 10 respectively) and two outer bushes (7, 7') associated with the latter and already rigidly connected thereto.

13. A sprocket chain according to any one or more of the preceding claims, **characterised in that** the inner plates (4, 5) are recessed, at their side facing the drive wheel, with a radius (R, R_{T}, r respectively) corresponding to the drive wheel diameter.

## Revendications

1. Chaîne à rouleaux (1), réalisée à la manière d'une chaîne à boulons, avec des douilles extérieures de palier (7, 7) en forme de pot, dans chacune desquelles est disposé un tronçon de boulon (8'), réalisé sous forme de chaîne de transport pour un transporteur à cellules, dont le brin de transport continu, formé de la chaîne (1) et d'une pluralité de cellules de transport (2), fixées les unes derrière les autres en rangées, circule sur deux roues de renvoi, disposées aux extrémités du tronçon de transport, dont la première est une roue entraînée et l'autre sert de roue tendeuse, en particulier pour un élévateur à godets à chaîne , en particulier un élévateur à godets simple ou double, ayant une ou plusieurs chaînes centrales, avec une pluralité de pattes intérieures (4, 5) disposées par paires, avec un espacement transversal (c) mutuel, parallèlement les unes aux autres, ainsi que par rapport à l'axe longitudinal de chaîne (3), et les pattes étant disposées en répondant à une symétrie spéculaire par rapport à celui-ci, les pattes intérieures étant reliées ensemble par deux boulons de chaîne (8) s'étendant à angle droit par rapport à l'axe longitudinal de chaîne (3), chacune en formant un maillon de chaîne (6) intérieur, les boulons (de chaîne) (8) s'étendant chaque fois à travers les deux pattes intérieures (4, 5), leur étant associés, d'une paire de pattes intérieure (4, 5), ainsi qu'à travers deux pattes extérieures (9, 10) à section transversale sensiblement en forme de L, qui relient ensemble de façon articulée chaque fois deux pattes intérieures (4, 4 respectivement 5, 5), voisines dans la direction longitudinale de chaîne (3), de deux maillons de chaîne intérieurs (6, 6), voisins l'un de l'autre, la chaîne (1) étant à relier rigidement aux cellules de transport (2) du transporteur à cellules, sur sa paroi extérieure (11) ; une première branche (9', respectivement 10') s'étendant parallèlement aux pattes intérieures (4, 5) de chaque patte extérieure (9, 10) de deux boulons (8.1, 8.2) voisins l'un de l'autre, de deux maillons de chaîne intérieurs (6.1, 6.2) voisins de l'autre, et l'autre branche de fixation (9", respectivement 10"), s'étendant, à l'état monté, parallèlement à la face extérieure de la paroi (11) de la cellule de transport (2) concernée, étant à relier, par des moyens de fixation, telles que par exemple des liaisons à vissage, rigidement à une paroi arrière (11) de cellule de transport, respectivement à une plaque de fixation ou analogue et chaque fois le tronçon médian (14) d'un boulon (8) présentant un diamètre (D1) supérieur à celui des deux tronçons de boulons (8', 8'),
les douilles extérieures (7, 7), chacune reliée rigidement à une patte extérieure (9 respectivement 10), étant de longueur faisant que la face intérieure de leur fond (15) est placée à distance d'une face frontale du boulon de chaîne (8) concerné, chaque fois en formant une chambre à graisse (17), devant être remplie d'un lubrifiant (18) tel que de la graisse ; et
chaque fois, entre la face de défilement (8") d'un tronçon d'extrémité de boulon (8') et le tronçon de boulon (20), se raccordant à celle-ci vers l'intérieur, étant prévu un joint d'étanchéité (21); entre le tronçon médian (14) de chaque boulon (8) et ses deux tronçons d'extrémité (8', 8'),étant chaque fois prévu un tronçon intermédiaire de boulon (20), dont le diamètre (D₂) est inférieur au diamètre (D₁) dans son tronçon médian (14), et supérieur au diamètre (d) sur ses tronçons d'extrémité (8', 8').

2. Chaîne à rouleaux selon la revendication 1, **caractérisée en ce que** les douilles extérieures (7) en forme de pot sont chacune formées d'un tronçon (13) tubulaire, à l'extrémité extérieure libre duquel est disposé un couvercle (15).

3. Chaîne à rouleaux selon la revendication 2, **caractérisée en ce que** le couvercle (15) est enfoncé dans le tronçon (13) tubulaire.

4. Chaîne à rouleaux selon la revendication 2, **caractérisée en ce que** le couvercle (15) est vissé dans le tronçon (13) tubulaire.

5. Chaîne à rouleaux selon l'une ou plusieurs des revendications précédentes, **caractérisée en ce que** les douilles extérieures (7) tubulaires sont chacune pressées rigidement fermement sur la patte extérieure (9 respectivement 10) afférente.

6. Chaîne à rouleaux selon l'une ou plusieurs des revendications précédentes, **caractérisée en ce que** le joint d'étanchéité, entre la face de défilement (8") de chaque tronçon d'extrémité de boulon (8') et le tronçon de boulon (20) se raccordant à celle-ci vers l'intérieur, est un joint d'étanchéité à labyrinthe (21).

7. Chaîne à rouleaux selon la revendication 6, **caractérisée en ce que** le joint d'étanchéité à labyrinthe (21) est formé chaque fois entre un tronçon d'extrémité de boulon (8') et un tronçon intermédiaire de boulon (20), le tronçon (13) tubulaire des douilles extérieures (7) en forme de pot ressortant chaque fois du tronçon d'extrémité de boulon (8') concerné, en présentant sur son tronçon d'extrémité ouvert intérieurement un diamètre intérieur (D₂), correspondant au diamètre (D₂) des tronçons intermédiaires de boulon (20), et la douille extérieure (7) venant en appui, par sa face frontale (22) annulaire, sur la face extérieure de la patte intérieure (4 respectivement 5) concernée, respectivement étant disposée étroitement voisine de celle-ci.

8. Chaîne à rouleaux selon l'une ou plusieurs des revendications précédentes, **caractérisée en ce que** les douilles extérieures (7) présentent chacune, aux tronçons d'extrémité intérieurs de leurs surfaces d'enveloppe extérieures, un diamètre extérieur supérieur à celui du reste du tronçon, dont le diamètre extérieur est égal au diamètre de perçage de la patte extérieure (9', respectivement 10') concernée.

9. Chaîne à rouleaux selon l'une ou plusieurs des revendications précédentes, **caractérisée en ce que** les boulons (8) sont chacun munis à leurs deux tronçons d'extrémité (8') - de préférence, avec un faible espacement relatif par rapport à leur face frontale respective - d'une gorge (28) de pourtour, dans laquelle est chaque fois est disposée une bague d'encliquetage (29) radialement élastique ; et **en ce que** les douilles extérieures (7) sont chacune munies, sur leur enveloppe intérieure, d'une gorge (28') correspondante, dans laquelle la bague d'encliquetage (29) vient s'encliqueter de façon désolidarisable lors du montage.

10. Chaîne à rouleaux selon l'une ou plusieurs des revendications précédentes, **caractérisée en ce que** les boulons (8) ayant subi un durcissement de la surface, de manière connue, présentent des zones de durcissement (30) ayant une profondeur durcie différente, avec un noyau (25) élastique, et ne sont pas durcie dans les zones d'entaille (26, 27) à variation de diamètre (D₁/D₂ ; D₂/d) importante, le cas échéant se faisant par à-coups.

11. Chaîne à rouleaux selon l'une ou plusieurs des revendications précédentes, **caractérisée en ce que** la profondeur durcie (h), dans le cas d'un diamètre de boulon moyen d'environ 35 à 70 mm, est d'environ 4 à 7 mm.

12. Chaîne à rouleaux selon l'une ou plusieurs des revendications précédentes, **caractérisée en ce qu'**elle (1) est formée par montage respectivement démontage de sections de chaîne prémontables, le cas échéant, également, sans cellule de transport (2) , chacune des sections de chaîne étant formée d'au moins un maillon de chaîne intérieur (6), d'une patte extérieure (9 respectivement 10) et de deux douilles extérieures (7, 7) associées à celle-ci, et déjà reliées rigidement à elle.

13. Chaîne à rouleaux selon l'une ou plusieurs des revendications précédentes, **caractérisée en ce que** les pattes intérieures (4, 5), sur leur face tournée vers la roue d'entraînement, sont creusées avec un rayon (R, respectivement R_{T} , respectivement r) correspondant au diamètre de la roue d'entraînement.
